# EUROPEAN PATENT APPLICATION

(11) **EP 2 690 156 A1**
(43) Date of publication of application: **29.01.2014**
(21) Application number: 12460061.0
(22) Date of filing: 10.09.2012
(51) Int. Cl.: C10G 2/00

(54) **Method for the preparation of paraffin waxes and use of paraffin waxes**

(30) Priority: 25.07.2012 PL 40013912
(71) Applicant: Terra Trade Spólka Z O.O., 32-065 Krzeszowice (PL)
(72) Inventor: Chodacki, Roman, 32-500 Chrzanow (PL); Likus, Jan, 32-065 Krzeszowice (PL); Kurdziel, Daniel, 32-545 Dulowa (PL); Fijolek, Robert, 31-105 Krakow (PL)
(74) Representative: Karczmitowicz, Teresa Ewa

(57) **Abstract**

The method of receiving the paraffin wax is characterized by that, the fractions crystallizable from the oil fractions having broad range of boiling point temperatures from 300°C to 600°C., of solid kerosene hydrocarbons and/or synthetic are deoleined, until the amount of oil is not higher than 3% m/m, than refining or hydrorefining, and next is fractionationed by using one or many steps vacuum cascade process of thin - layer fractionation until the product is received having group composition, of n-paraffins with the amount of carbon in molecule C20 to C40, where it is from 40 to 80 % of the wax mass, and isoparaffins having from C30 to C40 carbons in the molecule in the amount from 7 to 15 % of wax mass

## Description

The subject matter of the invention is the method of receiving the paraffin wax and the application of paraffin wax, particularly in the production of car tyres and rubber products and as a base to the others professional waxes having micro - crystal or heavy character, for the candle production industry, food production industry, cosmetic production industry, pharmaceutical industry etc.

There is known from the WO99/37737, the method of receiving wax using the thermal cracking of synthetic hard waxes produced by method Fisher - Tropsch's, where the basic compounds are n-paraffin hydrocarbons having high freezing temperature about 90°C and over, as a result of conversion is received lighter wax having smaller amount of carbon atoms in the molecule of paraffin hydrocarbon and as a consequence having smaller freezing temperature in the range from 60°C to 90° C.

The invention no US2004/0192979 A1, describes new method of producing fully synthetic micro -crystal wax with high capacity by catalytic hydroisomerization of paraffins produced by Fischer - Tropsch's synthesis having the amount of carbons in the molecule from C20 to C105. The paraffins which were the product could be solid or have the consistence of paste, in the room temperature, and have more isoparaffin hydrocarbons than n- paraffin.

The above described methods of producing waxes, do not allow to receive the product having the proper group chemical composition for protective waxes, particularly n-paraffin, isoparaffin and for kerosene hydrocarbons, where the chemical composition is limiting their application for the production of protecting waxes for rubber.

There is known from the Polish patent no 177912 B1, the method of producing the protective wax which was produced from micro- wax having the amount of oil to 3 %, which is melted in temperature from 100°C to 110°C with the mixture of solid kerosene hydrocarbons received in process of dissolvent dewaxing from deasphalting residual fraction from paraffin - base crude oil or paraffin - asphalt crude oils, having boiling temperature from 560°C to 620°C, in the amount to 3%. The next step according to the invention is heating the mixture from 140°C to 150°C, and while stirring constantly 3 % of polyethylene is added. When the polyethylene is completely dissolved in the mixture, the temperature is lowered from 100°C to 110°C and it is mixed with the antioxidant in the amount of 2%.

The described method of receiving the paraffin waxes is based on using kerosene waxes isolated from fraction having different range of boiling temperatures, beginning from 430°C until to 620°C, the method does not allow to produce the repeatable product having proper group chemical composition, and giving the quality protection of rubber against destructive ozone impact. The described method also requires the selection of substrates regarding group chemical composition, which decides of the useful characteristic of the product, it means the wax molecule migration and creating of protective layer on the surface of rubber, which makes difficult to use it.

The subject matter of the invention is the method of receiving the paraffin wax used particularly in the production of car tyres or other specifics having good antioxidant characteristic, protecting from creating ozone crackings on the surface of rubber, as a result of reaction with ozone by the creation of isolating layer. For the products made of rubber is particularly important to be hermetic and has the temperature strength of protective layer which should give good protection against ozone.

It has been found that the proper characteristic has wax having amorphous character, received from the proper mixture of solid kerosene hydrocarbons and/or synthetic, having strictly defined group chemical composition n-paraffin and isoparaffin.

The method according to the invention depends on using preferably the mixture of solid kerosene hydrocarbons and/or synthetic which were previously refined and deoleined, crystallizable from the oil fractions having broad range of boiling point temperatures from 300°C to 600°C.

The process of deoleing of solid kerosene hydrocarbons and/or synthetic, preferably using dissolving method or static crystallization is carried until the amount of oil is not higher than 3% m/m, the refining is made by adsorption preferably using the contact method. During the refining process are used adsorbents received by thermal modification or thermal - chemical modification of natural mineral compounds such as aluminosilicates, as well as synthetic adsorbents such as silica gel or aluminum dioxide or active carbons.

Most preferably the method of hydrorefining is used, and the mixture of hydrocarbons has more stable physical and chemical properties and better colour and smell.

The mixture of solid kerosene hydrocarbons and /or synthetic is next fractionationed by using one or many steps vacuum cascade process of thin - layer fractionation using subatmospheric pressure below 5 millibars, most preferably below 1 millibar, in order to receive the product of needed chemical group composition, having n-paraffin with the amount of carbon in molecule C20 to C40, where it is from 40 to 80% of the wax mass, and isoparaffin having from C30 to C40 carbons in the molecule in the amount from 7 % to 15 % of wax mass, where preferably the amount of isoparaffin having C30 to C40 carbons in molecule should be higher than the amount of isoparaffin having from C20 to C29 carbons in the molecule. The chromatographic testing shown that most preferably is carry out the method according to the invention by obtaining the chemical group composition having the chromatographic curve maximum, which shows the amount of n-paraffin in the range from C28 to C38 of carbons in the molecule. The chromatographic testing was made using the gas chromatograph with flame ionization detector, (GC/FID) according to the method 001/03 "Standard Test Method for Analysis of Hydrocarbon Waxes by Gas Chromatography"

The method of receiving paraffin waxes could be also made by processing the mixture of solid kerosene hydrocarbons and /or synthetic not refined and not deoleined, crystallizable from the oil fractions, having broad range of boiling temperatures from 300°C to 600°C, by using one or many steps vacuum cascade process of thin - layer fractionation using subatmospheric pressure below 5 millibars, the most preferably below 1 millibar, and next by refining and deoleing.

The tests shown, that good effects can be reached by processing fractional separation of the broad fraction of kerosene hydrocarbons or synthetic, having range of boiling temperatures from 300°C to 600 °C however, the best capacity was reached by using hydrocarbons having boiling temperatures from 480 °C to 600°C.

It has been found, that using the compound which were the hydrocarbon fractions having the limited temperatures of boiling point from 300°C to 480°CC allows also to get wax which has proper group chemical composition, but the capacity was lower such as about 25 % m/m, in this case it is necessary to use many steps vacuum cascade process of thin - layer fractionation, but using the compound which is the hydrocarbon fraction having limited boiling point temperatures from 480°C to 600°C allows to get wax having proper group chemical composition, but the capacity was much higher, such as about 50 % and higher, and by using only one step of fractionation.

The necessity of using the next step of fractionation, is estimated and depends on the results of analyze of group chemical composition. The wax which is received by the method of the invention having antiozonator characteristic and proper group chemical composition, just after the first step of the process could be used as a protective wax for rubber, if the group chemical composition requires change, the product is passed to the second step of fractionation or further steps.

The method of receiving the paraffin wax according to the invention provides the proper group composition and proper amount of carbons in the hydrocarbon molecules, which decides about efficiency of the product and its useful quality, the remaining parameters such as: kinematic viscosity, freezing temperature, penetration are the results from the adequate fraction having proper amount of carbons in the hydrocarbon molecules n-paraffin and isoparaffin.

The application of the method according to the invention, provides to receive the protective wax having group composition which decides of protective efficiency of the product and its useful quality and it brings independency from the quality and raw material composition, which could be the broad oil fraction or synthetic.

In the process of one or many steps vacuum cascade process of thin - layer fractionation, according to the invention, are produced the bases to the other waxes of particular application, having special strictly determined group composition and determined amount of carbons in the hydrocarbon molecules, which just after the fractionation process or in the mixture with different kerosene fractions or synthetic, polymers, ester waxes, hardened lipids, solid fatty acids, highmolecule alpha olefins etc., are used as waxes for casting forms, for moistening paper, for the food production industry, adhesion compounds for gluing the paper, metal foils, polymeric, cosmetic industry, pharmaceutical industry, feathers removal of poultry, etc.

What is more, the paraffin of kerosene origin usually contain light fractions having higher vapour pressure, as a result it brings unnecessary smell, which rejects the product from the use in food or cosmetic production industry. By using the method of the invention, it is possible to cut the first lightest kerosene fraction in the amount to 5% mass, removing the compounds having the highest vapour pressure, which give ugly smell to the solid kerosene products.

### Example 1

For the process of vacuum cascade of thin - layer fractionation was used refined and deoleined paraffin having parameters : the amount of oil 0,7 % m/m, the amount of carbons in the molecule from C18 to C40. As a result of fractionation under vacuum of 1 millibar two products were received having the amount of carbons in molecules from C18 to C33 and C23 to C41. The product having higher amount of heavier paraffin hydrocarbons was received with the efficiency of 40% m/m by using one fractionating and was analyzed, it was found that it has the freezing temperature 60°C, and the amount of n-paraffin 51% m/m, isoparaffin C30 to C40 - 9% m/m and the chromatographic curve maximum, for n-paraffin is for C31. The amount of isoparaffin hydrocarbons C20 to C29 was smaller than 1% m/m, and the amount of oil was lowered to 0,5 m/m. The analyses confirmed, that the group composition of the product is optimum to the wax for rubber.

### Example 2

For the process of vacuum cascade of thin - layer fractionation was used paraffin as a compound, which was previously refined and deoleined, the amount of oil was 1,5 % m/m, and it smelled intense like kerosene, the amount of carbons in the molecules was from C18 to C37. After one fractionation it was found, that the fraction of heavier hydrocarbons from C20 to C38, which was received with the efficiency 25% , has the freezing temperature 57°C, and the chromatographic curve maximum is for C26 and is odour-free, that is why the semi - finished product was sent to the second step of fractionation, and the product was received with the efficiency 15% (counting to the starting compound) and it had the parameters: the amount of n-paraffin 53% m/m, C maximum at C30, the amount of isoparaffin C30 to C40 - 7,5 % m/m, and C20 to C29 - below 1 % m/m, the freezing temperature 59°C, the amount of oil 1,2 % m/m.

### Example 3.

For the process of vacuum cascade of thin - layer fractionation was used slack wax having amount of oil 10% m/m, the number of carbons in molecules from C 18 to C42, and as a result of one fractionation was received the paraffin - isoparaffin fraction having the amount of oil 8,6 % m/m, the amount of carbons in the molecule from C24 to C42 and Cmax 32, which is the good quality compound as a wax for rubber or wax for moistening cotton. The base was two times refining with fuller's earth by using percolation, and next by using active carbon. After refining the product was deoleined using the static - crystallization, as a result the amount of oil lowered to 0,3 % m/m.

## Claims

1. The method of receiving the paraffin wax on the base of the mixture of solid kerosene hydrocarbons and/or synthetic is **characterized by** that, the fractions crystallizable from the oil fractions having broad range of boiling temperatures from 300°C to 600°C, of solid kerosene hydrocarbons and/or synthetic are deoleined, until the amount of oil is not higher than 3% m/m, than refining or hydrorefining, and next is fractionationed by using one or many steps vacuum cascade process of thin - layer fractionation until the product is received having group composition of n-paraffin with the amount of carbon in molecule C20 to C40, where it is from 40 to 80 % of the wax mass, and isoparaffin having from C30 to C40 carbons in the molecule in the amount from 7 to 15 % of wax mass.

2. The method of receiving the paraffin wax on the base of the mixture of solid kerosene hydrocarbons and/or synthetic is **characterized by** that, the fractions crystallizable from the oil fractions having broad range of boiling temperatures from 300°C to 600°C, of solid kerosene hydrocarbons and/or synthetic, is fractionationed by using one or many steps vacuum cascade process of thin - layer fractionation, next it is deoleined, until the amount of oil is not higher than 3% m/m, than refining or hydrorefining, as a result the product has the group composition of n-paraffin with the amount of carbon in molecule C20 to C40, where it is from 40 to 80 % of the wax mass, and isoparaffin having from C30 to C40 carbons in the molecule in the amount from 7 to 15 % of wax mass.

3. The method according to claim 1 or 2, **characterized by** that, one or many steps vacuum cascade process of thin - layer fractionation is carried by using subatmospheric pressure below 5 millibars, preferably below 1 millibar.

4. The method according to claim 1 or 2, **characterized by** that, preferably in the group composition the product has isoparaffin with the amount of carbon in molecule C30 to C40, is higher than the amount of isoparaffin having from C20 to C29 carbons in the molecule, and maximum is for the amount of n-paraffin in the range from C28 to C38 of carbons in the molecule.

5. The application of the paraffin wax obtained by the method according to the invention, as a protective wax for rubber and as a base to produce waxes for casting forms, for moistening paper for the food production industry, adhesion compounds for gluing the paper, metal foils, polymeric, waxes for cosmetic industry, pharmaceutical industry, waxes for feathers removal of poultry,
